# EUROPEAN PATENT SPECIFICATION

(11) **EP 4 395 227 B1**
(45) Date of publication and mention of the grant of the patent: **18.11.2026**
(21) Application number: 23218505.8
(22) Date of filing: 20.12.2023
(51) Int. Cl.: H04L 9/00, H04L 9/30, H04L 9/08

(54) **ADAPTIVE COUNTERMEASURE FOR BIT LEAKAGE IN LATTICE-BASED CRYPTOGRAPHY**
ADAPTIVE GEGENMASSNAHME FÜR BIT-LECKS IN LATTICE-BASIERTER KRYPTOGRAPHIE
CONTRE-MESURE ADAPTATIVE POUR FUITE DE BITS DANS UNE CRYPTOGRAPHIE À BASE DE RÉSEAU

(30) Priority: 29.12.2022 US 202218090999
(43) Date of publication of application: 03.07.2024
(73) Proprietor: NXP B.V., 5656 AG Eindhoven (NL)
(72) Inventor: Azouaoui, Melissa, 5656AG Eindhoven (NL); Schneider, Tobias, 5656AG Eindhoven (NL); Schoenauer, Markus, 5656AG Eindhoven (NL)
(74) Representative: Krott, Michel

(56) References cited:
- MELISSA AZOUAOUI ET AL: "Leveling Dilithium against Leakage: Revisited Sensitivity Analysis and Improved Implementations", vol. 20221017:084434, 17 October 2022 (2022-10-17), pages 1 - 25, XP061073651, Retrieved from the Internet <URL:https://eprint.iacr.org/archive/2022/1406/1665996274.pdf> [retrieved on 20221023]
- MIGLIORE VINCENT ET AL: "Masking Dilithium", 29 May 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 344 - 362, ISBN: 978-3-319-10403-4, XP047508959
- MARKKU-JUHANI O SAARINEN: "Masked Key Wrapping and Mask Compression", vol. 20221102:220331, 2 November 2022 (2022-11-02), pages 1 - 28, XP061073671, Retrieved from the Internet <URL:https://eprint.iacr.org/archive/2022/1499/1667426611.pdf> [retrieved on 20221102]

## Description

### TECHNICAL FIELD

The present disclosure is directed in general to a system and method for processing cryptographic data in electronic devices and, specifically, to a system and method for providing improved side channel protection in devices implementing lattice-based cryptography schemes.

### BACKGROUND

Digital cryptography schemes play an important role in the world's data communication infrastructure. Such schemes underpin important authentication and transaction validation infrastructures in the form of digital certificates to secure digital transactions occurring on the Internet or across other communication networks. Often, such authentication and validation systems are implemented by devices participating in Internet of Things (IoT) networks or other types of sensors, actuators, and appliances, to transmit and receive data and to validate the authenticity of received instructions and commands.

To provide robust authentication and validation schemes in the face of new technology, recent significant advances in quantum computing have accelerated the research into postquantum cryptography schemes: cryptographic algorithms that run on classical computers but are still secure even when faced with an adversary with access to quantum computing resources. This demand is driven by interest from standardization bodies. This research involves evaluating potential lattice-based cryptography schemes as potential replacements for elliptic curve cryptography digital signatures (e.g., ECDSA), notably for embedded use cases. Similar to their elliptic-curve-cryptography-based counterparts, however, such lattice-based cryptography schemes can be targeted by algebraic side-channel attacks exploiting the leakage of a single bit of the random secret value.

The paper "Leveling Dilithium against Leakage: Revisited Sensitivity Analysis and Improved Implementations", written by Melissa Azouaoui et al. and published by the International Association for Cryptologic Research, on 17 October 2022, describes different improvements of the side-channel countermeasures of Dilithium.

The paper "Masking Dilithium: Efficient Implementation and Side-Channel Evaluation", written by Vincent Migliore et al. and published in Advances in Databases and Information Systems, on 29 May 2019, provides an analysis of Dilithium from a side-channel perspective.

The paper "Masked Key Wrapping and Mask Compression", written by Markku-Juhani O. Saarinen and published by the International Association for Cryptologic Research, on 2 November 2022, describes a masking-friendly key management technique and encoding format for Kyber and Dilithium Critical Security Parameters.

### SUMMARY

In accordance with a first aspect of the present disclosure, a device is provided, as defined in claim 1.

In one or more embodiments, the processor is configured to generate the cryptographic signature value associated with the input data value using each of the first set of share values and the adaptive share value.

In one or more embodiments, the lattice-based digital signature scheme is a Fiat-Shamir lattice-based cryptography scheme.

In one or more embodiments, the lattice-based cryptography scheme is a DILITHIUM digital signature scheme.

In one or more embodiments, the set of bit indexes includes an 8th bit of the secret bit masking vector y.

In accordance with a second aspect of the present disclosure, a method operating a device to implement a lattice-based digital signature scheme is conceived, as defined in claim 6.

In one or more embodiments, the method further comprises generating the digital signature value associated with the input data value using each of the first set of share values and the adaptive share value.

In one or more embodiments, the method further comprises determining that the lattice-based digital signature scheme is a DILITHIUM digital signature scheme.

In one or more embodiments, the method further comprises determining that the set of bit indexes includes an 8th bit of the bit masking value y.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 depicts steps in an algorithm for performing adaptive masking of bit values in a secret value y in accordance with the present disclosure.
FIG. 2 is a chart that depicts levels of protection for bits in the secret value y of a DILITHIUM digital signature scheme, where parameters of the present bit masking algorithm are selected to protect against an attacker with access to fewer than 2²⁰ signatures.
FIG. 3 is a chart that depicts levels of protection for bits in the secret value y of a DILITHIUM digital signature scheme, where parameters of the present bit masking algorithm are selected to protect against an attacker with access to fewer than 2⁴⁰ signatures.
FIG. 4 is a chart that depicts levels of protection for bits in the secret value y of a DILITHIUM digital signature scheme, where parameters of the present bit masking algorithm are selected to protect against an attacker with access to fewer than 2⁷⁰ signatures.
FIG. 5 is a table depicting the number of randomness bits used by a standard masking approach when masking all the bits of the value y as compared to the number of randomness bits required when masking bits of the value y in accordance with the present disclosure.
FIG. 6 is a block diagram depicting functional components of a data processing system including a co-processor for implementing the adaptive share bit masking approach of the present disclosure.
FIG. 7 is a flowchart of an example method for operating a device to implement an encryption scheme in accordance with the present disclosure.

### DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

The signing operation of a digital signature scheme generates a cryptographic signature value for a given message using a secret cryptographic key. If, while implementing the digital signature scheme, the value of the secret key is leaked or otherwise made accessible to third parties, that potential for third party knowledge of the secret key would invalidate the security properties provided by that digital signature scheme.

Some proposed post-quantum computing digital signature schemes have been shown to leak portions of the scheme's secret signing keys and/or the schemes secret masking vectors that are used to obfuscate the scheme's secret signing keys during signature processing via side-channel leakage. Side-channel leakage attacks may involve an attacker observing power consumption or electro-magnetic emissions of particular communication pins of various components of the device to detect voltage fluctuations enabling the attacker to extract data bits that are indicative of private key or secret masking values being processed by the device using side-channel analysis. Devices such as IoT devices, where the attacker has physical access to the device, may be particularly susceptible to these types of attacks as an attacker is free to access the internal components of the device. Additionally, attackers may be able to modify the operating conditions of the device, or otherwise alter components of the device, so that the data indicative of the device's private keys and secret masking values may be accessed.

In some such attacks, it may not be necessary for an attacker to know all the bits of a private key in order to break the digital signature scheme. For example, partial key or secret masking vector exposure attacks can allow an attacker to recover an entire private key from only a partial knowledge of the key's or secret masking value's bits. For example, in a similar manner to their elliptic-curve-cryptography-based counterparts, lattice-based cryptography schemes can be attacked using algebraic side-channel attacks that exploit the leakage of a single bit of the scheme secret masking vector's value. Here, the secret masking vector refers to a random and non-repeating value that is utilized by a digital signature scheme to protect the scheme's private keys each time a particular private key is used to sign a data input.

In some such lattice-based cryptography schemes, the index of the targeted bit in the masking vector can affect the effectiveness of such an attack. For example, it has been shown that the secret signing key **s₁** employed by the DILITHIUM digital signature scheme can be recovered by extracting only a single bit of the masking vector **y**'s coefficients from side-channel leakage that occurs over a number of signature generations. In this attack, the index of that single bit can affect how difficult it is to determine the value of the secret key. In the DILITHIUM scheme, knowledge of the value of the 8*^{th}* bit of the masking vector is the most useful for an attacker and requires an achievable minimum number of signatures (e.g., about 3000 signatures) in order for an attacker to retrieve the value of the scheme's private key. For each bit index increment (e.g., for the ninth bit of the secret masking vector value and so on), the number of required signatures for a successful attack and recovery of the private key increases dramatically.

In general, when applying these types of attacks to the DILITHIUM digital signature, the bits targeted in the side-channel attack tend to be the 8th to about the 19th bit of the secret masking value vector **y.** However, the bit values at different bit indexes in the secret masking vector **y** do not provide the same degree of usefulness to an attacker when attempting to recover a corresponding secret key **s₁**. For example, knowledge of the 8^{th} bit of the secret masking vector **y** enables the secret key **s₁** to be recovered with only about 3,000 signatures, four times as many signatures are required to recover the secret key **s₁** if only the 9th bit of the secret masking vector **y** is known, and so on. If only the 19^{th} bit of the secret masking vector **y** is known, for example, 2³⁹ signature values are required.

In evaluating the security of a particular digital signature scheme, that security is evaluated based on the weakest link in the chain, which in this specific case is the 8^{th} bit of the scheme secret masking vector **y.** Standard masking techniques will generally protect all bits equally of a value, meaning that the same cost (e.g., in terms of computing power) is spent on protecting all bits each time the value is used, despite not all of those bits requiring the same level of protection.

Consequently, the present disclosure provides an adaptive bit masking technique that improves (i.e., reduces) the cost of protecting the secret masking vector **y** in a digital signature scheme, such as DILITHIUM, by enabling more efficient masking of the secret masking vector's **y**'s bit values. In an embodiment, this improvement may be achieved by taking into account the weakness of the individual bit indexes of the secret masking vector **y** (i.e., with the 8^{th} bit being the weakest in the DILITHIUM scheme) and applying appropriate levels of protection (i.e., bit masking) across the bits of the secret nonce y to reduce the amount of randomness needed and thereby improve the robustness of the digital signature scheme's implementation.

In this disclosure, various embodiments of the present approach for improving bit protection against side-channel attacks are presented with respect to the DILITHIUM digital signature scheme, however, it should be understood that the present approach may be utilized to provide more efficient bit masking for any communication protocols to provide improved security. As such, the generalized version of this approach can be applied to other digital signature schemes (and encryption schemes in general) that may be vulnerable to bit leakage attacks, such as qTESLA or other schemes that utilize Fiat-Shamir with aborts signatures or comprise lattice-based signature schemes.

The present approach can be tailored to provide an adequate (and quantifiable) amount of improved security against bit leakage attacks without expending computing resources on protecting or masking bits that are of minimum use to an attacker. That can be useful in devices with limited computing resources (e.g., IoT devices or other devices with constrained memory and processing resources) where algorithmic efficiency is an important aspect when designing a bit masking algorithm. Important metrics for these types of bit masking implementations can include the number of operations required to implement the algorithm and the number of fresh random elements required for the masking scheme.

In the present approach, adaptive masking enables the most vulnerable bits of the target value to be protected, as such, the more susceptible a bit index is to an attack, the more that bit index is protected. As such, unnecessary computing time and random value generation requirements are minimized when protecting (i.e., masking) less vulnerable bits.

When signing a message using the DILITHIUM digital signature scheme or other similar cryptographic signature schemes, the signature algorithm relies upon a secret masking vector **y** when generating an output signature. To protect the secret masking vector **y** value, during processing the masking vector y is mathematically decomposed into a number of shares **yᵢ** to reduce the likelihood that the entire value **y** can be retrieved by an attacker. Decomposition involves converting a secret value (i.e., **y**) into a plurality of other values that, taken individually provide no information about the secret value, but can be utilized as a whole to perform mathematical operations (e.g., cryptographic operations) that are equivalent to using the secret value to perform the operation. In this manner, the secret value itself is not utilized when performing the cryptographic operation. As such, the shares **yᵢ** can then be used iteratively to accurately calculate a digital signature without exposing the true value of the secret masking vector **y.**

When generating the individual adaptive shares **yᵢ** of the original vector **y,** the present disclosure provides an approach for generating different numbers of adaptive shares for different bit indexes in **y,** where the number of adaptive shares for each bit index are adjusted to provide different levels of protection to the different bit indexes of the value **y** (where the bits have different levels of vulnerability) to provide improved protection against side channel attacks.

In describing the present bit masking system, the following variables and/or functions are defined:
*q*: Modulus - a value that may be a prime number or a power of 2 that species the ranges of values that are used by the algorithm.
*y:* one arbitrary coefficient of y.
*d:* The number of standard masking shares.
*d'*: The number of adaptive masking shares.
*d":* The total number of masking shares, which is equivalent to the sum of d + d' + 1.
*xᵢ:* i^{th} bit of variable x.
*xⱼ:* j^{th} share of variable x.
*x* ← *S*: x is randomly and uniformly picked from the set S.
*I:* A list that identifies the indexes of the bits of the value y that are to be hardened using adaptive shares.
Δ*(i)*: A list that identifies for each bit index that is being protected (as specified by the list *I*), the number of adaptive shares that will be used to additionally harden the protection of the i^{th} bit in the value **y.**
*Max(S):* The function computing the maximum value in a set S.

With these variables and/or functions established, the present approach for adaptive bit masking utilizes a combination of standard masking with specifically constructed shares to adaptively protect different bits of the sensitive value **y.** To this end, the approach generates d standard shares, and then generates d' specifically crafted shares to harden specific bits at specific indexes.

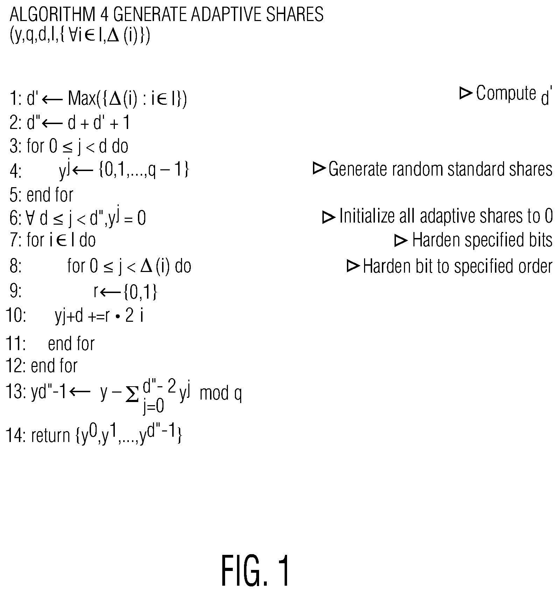

FIG. 1 depicts steps in an algorithm for performing adaptive masking of bit values in a secret value **y** in accordance with the present disclosure. Referring to FIG. 1, before execution of the algorithm, the values y, q, d, I, and {∀i ∈ I, Δ(i)} are determined. In line 1, the number of adaptive masking shares *d'* is determined as the maximum number of adaptive shares that have been allocated for each bit (i.e., Δ*(i)*) for each of the bits to be hardened (i.e., identified by *I*). In line 2, the total number of masking shares *d"*, is determined as the sum of the number of standard masking shares *d* plus the number of adaptive masking shares *d' +*1*.* The plus 1 value is utilized because the d and d' shares are all generated randomly, but in order to reconstruct the original y value it may be necessary to use one additional share (hence the +1) such that the sum of all d+d'+1 shares is equal to y. This last share is not generated randomly, but computed as y minus the sum of all d shares minus the sum of all d' shares.

With the *d'* and *d"* values determined, at line 3 the algorithm enters a loop that iterates through values of j from 0 to d-1 where, for each value of j, a random standard share is generated according to the expression g ← {0, 1, ... , q - 1}, where y^{j} represents the set of random standard shares. As such, the loop formed by lines 3, 4, and 5 in the algorithm of FIG. 1 generates a conventional set of d random shares.

In line 6, the algorithm initializes to zero values a set of additional adaptive shares according to the expression V d ≤ j < d", y = 0. As such, at the completion of line 6 a number of adaptive shares y^{j} equal to d' (also equal to d" minus d minus 1 based on line 2) have been initiated. In the algorithm, the initiation of a share involves setting the share value equal to 0.

Line 7 of the algorithm creates a loop in which the value i iterates through the values of each bit index that has been designated for hardening in the list *I*. For each bit to be hardened, line 8 creates a sub-loop in which the value j is iterated from 0 through the corresponding number of adaptive shares Δ*(i)* for the bit index designated by the variable i. In line 9, for each adaptive share a value r is generated as a random bit having a value of 0 or 1 and in line 10 the value equal to r * 2ⁱ is added to the adaptive share y^{j+d} to mask the bit at index i (the multiplication by the value 2ⁱ causes the bit value r to be added to the adaptive share at the bit index i).

At line 13, after the adaptive shares have been generated for each bit designated in *I* for hardening, a final share value y^{d"-1} is calculated as the original value **y** minus the sum of all shares y⁰ through y^{d"-2} modulus q. Specifically, line 13 of the algorithm corresponds to the computation of an additional last share value y^{d"-1} that allows for the reconstruction of the value y such that the sum of all of its shares are equal to its value. Otherwise, without this last share, we would be performing the following computations on the shares of a random value instead of y. The modulus operation in line 13 is dictated by the DILITHIUM signature scheme because later steps in the algorithm are performed modulus q and expect inputs modulus q.

At line 14 the method ends by returning the values of all shares y0 through y^{d"-1}, which can then be utilized to execute a cryptographic operation, such as signing an input data set or a message or other form of data.

With the values returned in step 14, conventional techniques may be utilized to compute signature values using the shares of y. Such operations that utilize the shares of y are masked, for which algorithms are either straightforward, known or described in the literature or prior art. As such, existing signature scheme implementations may use the adaptive shares generated in accordance with this disclosure (and the algorithm of FIG. 1) in the same manner as a set of shares constructed according to conventional masking approaches that are not adaptive.

In conventional bit masking approaches, bit masking with *d"* shares requires $\left(d+d′\right) \left⌈{log}_{2}\left(q\right)\right⌉$ bits of randomness because each bit being masked is protected by the same number of shares. In contrast, the approach illustrated in FIG. 1 and described above requires only $d \left⌈{log}_{2}\left(q\right)\right⌉ + {\sum }_{i ∈ I} Δ \left(i\right)$ bits of randomness. This approach can provide a particular level of security, while reducing the computational overhead. This can be of particular benefit to resource-constrained devices, such as IoT devices, as described herein.

An example of the present bit masking approach and its corresponding benefits are now presented with specific reference to the DILITHIUM digital signature scheme. It should be understood, however, that embodiments of the present bit masking approach may be utilized in conjunction with other types of digital signature schemes that are vulnerable to bit leakage attacks during a data signing process.

In the present example, the following values for auxiliary variables and functions are utilized.
*q:* prime modulus. It is equal to *q =* 2²³ - 2¹³ + 1.
*n*: number of polynomial coefficients, which is set to 256.
ℓ: number of polynomials in the vector ***y***. In this example ℓ is equal to 4, 5 and 7 for National Institute of Standards and Technology (NIST) security levels 2, 3 and 5, respectively.

In embodiments of the DILITHIUM digital signature scheme, the 8*^{th}* bit of the secret value **y,** if known to an attacker, renders the signature scheme most vulnerable to an attacker. Bits with greater indexes are increasingly less vulnerable to an attacker. As such, bits with greater indexes do not require the same level of protection as implemented by varying number of shares being assigned to the respective bits. Consequently, by selecting particular parameters to be utilized by the present bit masking approach, where the parameters specify which bits of the value **y** require adaptive masking, it is possible to implement a desired level of side-channel security and protection for the signature scheme. Generally, as the side-channel security level of the scheme increases, the computing cost of implementing the scheme increases, so it can be possible to establish a set of parameters for the invention that achieves a desired level of side-channel security, while requiring minimal computing resource requirements (e.g., memory and processing power) enabling the scheme to be implemented by resource-constrained devices, such as IoT devices.

In specific examples, as detailed below, parameters may be selected to achieve desired levels of security for the DILITHIUM digital signature scheme to protect against an attacker in possession of, for example, 2²⁰, 2⁴⁰ and 2⁷⁰ signatures. In these specific examples, low order bits are not masked (hence *d =* 0), while bits that can be exploited for bit leakage attacks (i.e., bits of the secret masking vector **y** with indexes of 7 (equating to the 8^{th} bit) or greater are protected with adaptive shares in accordance with the algorithm depicted in FIG. 1.

In a first example, to provide adequate protection in the event that an attacker has access to 2²⁰ signatures, the following parameters may be established: *I*₂₂₀= *{*7, 8, ..., 15*}* and Δ₂₂₀ = [2,2,1,1,1,1,1,1,1], such that *d" =* 3.

In a second example, to provide adequate protection in the event that an attacker has access to 2⁴⁰ signatures, the following parameters may be established: *I*₂₄₀= *{*7, 8, ... , 22} and Δ₂₄₀ = [4,4,3,3,2,2,2,2,2,1,1,1], such that *d" =* 5.

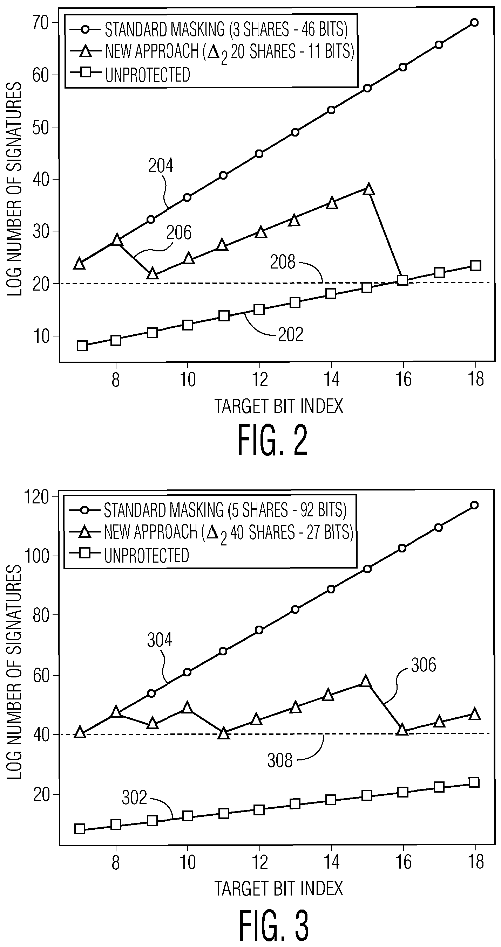

In a third example, to provide adequate protection in the event that an attacker has access to 2⁷⁰ signatures, the following parameters may be established: *I*₂₇₀= *{*7, 8, ... , 22*}* and Δ₂₇₀= [8,7,6,5,5,4,4,4,3,3,3,2], such that *d" =* 9. These approaches are now compared to three examples of standard masking approaches that utilized the same maximum number of shares *d" ∈ {*3,5,9*}* in FIG. 2.

Specifically, FIG. 2 is a chart that depicts levels of protection for bits in the secret masking vector y of a DILITHIUM digital signature scheme, where parameters of the scheme are selected to protect against an attacker with access to up-to 2²⁰ signatures. In FIG. 2, the horizontal axis represents bit indexes. The index values are only shown for the bits of the secret value y that are considered bits that may be subject to attacks (i.e., bits with index value of 7 or greater). The vertical axis represents the logarithm value of the number of signatures required for an attacker to successfully attack the signature scheme based on the value of a particular bit. In FIG. 2, line 202 represents the risk profile for the signature scheme whenno bit protection is implemented. Line 204 represents the risk profile for the signature scheme when implementing conventional bit masking. Finally, line 206 represents the risk profile for the signature scheme when implementing the present adaptive bit masking approach. The horizontal line 208 represent the desired security level, as expressed by the number of signatures required to be known by an attacker before the digital scheme is likely to be broken.

As depicted in FIG. 2 and, specifically by line 206, the present adaptive bit masking approach can be configured to normalize the level of protection afforded to all of the risky bits in the value **y,** while providing that each bit is protected to a degree requiring an attacker have access to a number of signatures that exceeds the target amount (as indicated by dashed line 208). The conventional approach (as depicted by line 204) also provides adequate protection to each bit, but exhibits significant inefficiencies. Specifically, the conventional approach provides adequate protection to the riskiest bits (e.g., bits with indexes close to 8), while providing an excessive amount of protection to bits that are not particular risky. For example, the conventional approach protects the bit with index 18 (a bit that is not particularly risky) against about 2⁷⁰ signatures. This excessive level of protection is indicative of wasted computing resources in the conventional bit masking approach. Specifically, in the 2²⁰ case, the conventional approach (indicated by line 204) requires 46 bits of randomness to implement, while the present approach (indicated by line 206) requires only 11 bits of randomness to implement, a significant reduction in required resources.

FIG. 3 is a chart that depicts levels of protection for bits in the secret vector y of a DILITHIUM digital signature scheme, where parameters of the scheme are selected to protect against an attacker with access to fewer than 2⁴⁰ signatures. In FIG. 3, the horizontal axis represents bit index values. The index values are only shown for the bits of the secret value y that are considered bits that may be subject to attacks (i.e., bits with index value of 8 or greater). The vertical axis represents the logarithm value of the number of signatures required for an attacker to successfully attack the signature scheme based on the value of a particular bit. In FIG. 3, line 302 represents the risk profile for the signature scheme when no bit protection is implemented. Line 304 represents the risk profile for the signature scheme when implementing conventional bit masking. Finally, line 306 represents the risk profile for the signature scheme when implementing the present adaptive bit masking approach. The horizontal line 308 represents the desired security level, as expressed by the number of signatures required to be known by an attacker before the digital scheme is likely to be broken.

As depicted in FIG. 3 and, specifically by line 306, the present adaptive bit masking approach can be configured to normalize the level of protection afforded to all of the risky bits in the value y, while providing that each bit is protected to a degree requiring an attacker have access to a number of signatures that exceeds the target amount (as indicated by dashed line 308). The conventional approach (as depicted by line 304) also provides adequate protection to each bit, but exhibits significant inefficiencies. Specifically, the conventional approach provides adequate protection to the riskiest bits (e.g., bits with indexes close to 8), while providing an excessive amount of protection to bits that are not particular risky. For example, the conventional approach protects the bit with index 18 (a bit that is not particularly risky) against about 2¹¹⁷ signatures. This excessive level of protection is indicative of wasted computing resources in the conventional bit masking approach. Specifically, in the 2⁴⁰ case, the conventional approach (indicated by line 304) requires 92 bits of randomness to implement, while the present approach (indicated by line 306) requires only 27 bits of randomness to implement, a significant reduction in required resources.

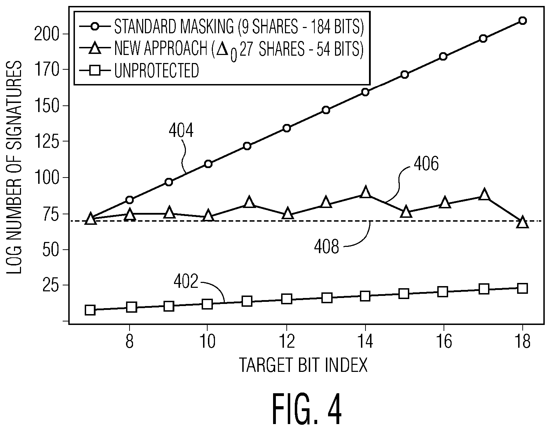

FIG. 4 is a chart that depicts levels of protection for bits in the secret value y of a DILITHIUM digital signature scheme, where parameters of the scheme are selected to protect against an attacker with access to fewer than 2⁷⁰ signatures. In FIG. 4, the horizontal axis represents bit index values. The index values are only shown for the bits of the secret value y that are considered bits that may be subject to attack (i.e., bits with index value of 8 or greater). The vertical axis represents the logarithm value of the number of signatures required for an attacker to successfully attack the signature scheme based on the value of a particular bit. In FIG. 4, line 402 represents the risk profile for the signature scheme when no bit protection is implemented. Line 404 represents the risk profile for the signature scheme when implementing conventional bit masking. Finally, line 406 represents the risk profile for the signature scheme when implementing the present adaptive bit masking approach. The horizontal line 408 represents the desired security level, as expressed by the number of signatures required to be known by an attacker before the digital scheme is likely to be broken.

As depicted in FIG. 4 and, specifically by line 406, the present adaptive bit masking approach can be configured to normalize the level of protection afforded to all of the risky bits in the value **y,** while providing that each bit is protected to a degree requiring an attacker have access to a number of signatures that exceeds the target amount (as indicated by dashed line 408). The conventional approach (as depicted by line 404) also provides adequate protection to each bit, but exhibits significant inefficiencies. Specifically, the conventional approach provides adequate protection to the riskiest bits (e.g., bits with indexes close to 8), while providing an excessive amount of protection to bits that are not particular risky. For example, the conventional approach protects the bit with index 18 (a bit that is not particularly risky) against about 2²¹⁰ signatures. This excessive level of protection is indicative of wasted computing resources in the conventional bit masking approach. Specifically, in the 2⁷⁰ case, the conventional approach (indicated by line 304) requires 184 bits of randomness to implement, while the present approach (indicated by line 306) requires only 54 bits of randomness to implement, a significant reduction in required resources.

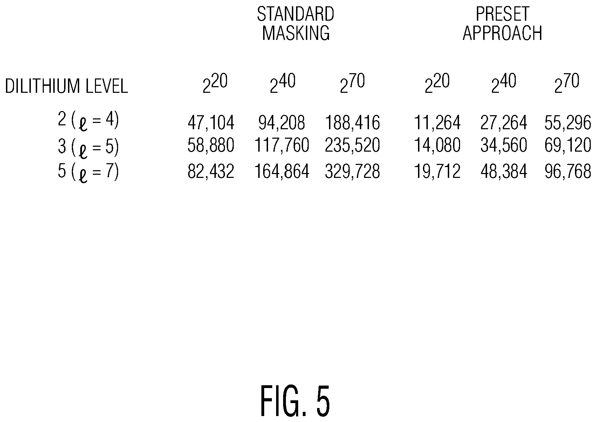

The charts depicted in FIGS. 2-4 provide illustrations of the present adaptive masking approach over a subset of bits in the secret masking vector y of a DILITHIUM digital signature scheme (i.e., bits with indexes of 8 through 18). To illustrate the full benefits of the present approach, FIG. 5 is a table depicting the number of randomness bits used by a standard masking approach when masking all the bits of the masking vector y as compared to the number of randomness bits required when masking bits of the value y in accordance with the present disclosure. The number of required randomness bits for each approach are provided for a number of different implementations of the DILITHIUM digital signature scheme for different values of ℓ (i.e., the number of polynomials in the vector y). As illustrated by the table of FIG. 5, for each implementation of the DILITHIUM digital signature scheme, when using the present adaptive bit masking approach there are significant reductions in required randomness bits as compared to conventional masking approaches. Consequently, the present bit masking approach provides adequate protection across all vulnerable bits as standard masking with a lower randomness complexity. In addition, due to the smaller shares, some operations during the signature generation can be optimized and corresponding storage requirements may also be reduced enabling robust bit masking protection to be implemented by even lower-resource computing devices.

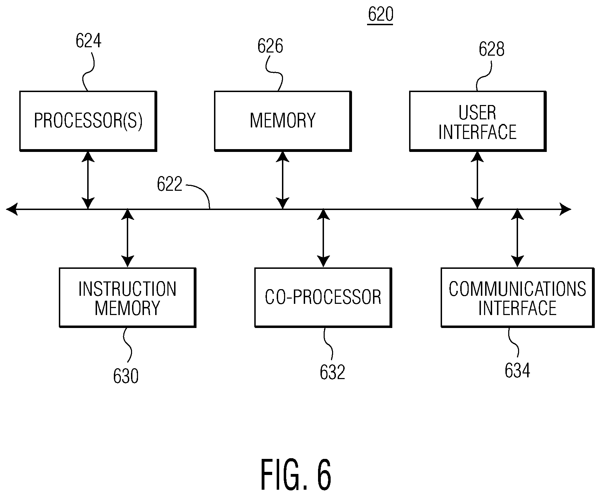

FIG. 6 is a block diagram depicting functional components of data processing system 620 including a co-processor 632 for implementing the adaptive share bit masking approach of the present disclosure. In various embodiments, data processing system 620 may include a low resource computing system, such as an IoT device or other device having constrained memory and processing power. An example data processing system 620, for example, may have 8 KB of working memory, some of which will be occupied by data stored by other processes running on data processing system 620. Consequently, such a device attempting to calculate and stream signature hash values may have about 4 KB of memory to perform that activity and may make it impossible for the device to perform.

Data processing system 620 may be a system-on-a-chip (SoC) implemented on a single integrated circuit, or it may be a combination of chips. In other embodiments, data processing system 620 may be implemented within an integrated circuit that may include another type of circuit such as an ASIC (application specific integrated circuit), FPGA (field programmable gate array), or the like, that can provide execute instructions. In one embodiment, data processing system 620 may include metal-oxide semiconductor (MOS) transistors fabricated using a conventional complementary metal-oxide semiconductor (CMOS) process. In another embodiment, data processing system 620 may include other transistor types, such as bipolar, and may be manufactured with a different process.

Data processing system 620 includes communication bus 622, processor(s) 624, memory 626, and cryptography co-processor 632. Bus 622 may be a conventional bus having a plurality of conductors for communicating address, data, and control information. In other embodiments, bus 622 may be an interconnect structure such as for example, a crossbar switch or other form of interconnect system. Processor(s) 624 is bi-directionally connected to bus 622. Processor(s) 624 may include one or more of any type of processing element, a processor core, microprocessor, microcontroller, field-programmable gate arrays (FPGAs), application-specific integrated circuits (ASICs), digital signal processor, and the like. There can be any number of processors.

Memory 626 is bi-directionally connected to bus 622. Memory 626 can be one or more of any type of volatile or non-volatile memory and is generally non-transitory. Examples of memory types include non-volatile memories such as flash, one-time programmable (OTP), EEPROM (electrically eraseable programmable read only memory), and the like. Volatile memory types include static random-access memory (SRAM) and dynamic random-access memory (DRAM). The memory may be used for storing instructions and/or data.

In various embodiment, memory 626 may store data values and structure utilized when processor 624 implements the present adaptive bit masking approach. Such values stored by memory 626 may include the values y, q, d, I, and {∀i ∈ I,Δ(i)}, and others, which are described in detail above.

An optional user interface 628 can be bi-directionally connected to bus 622 and may be connected to one or more devices for enabling communication with a user such as an administrator. For example, user interface 628 may be enabled for coupling to a display, a mouse, a keyboard, or other input/output device. User interface 628 may also include a network interface having one or more devices for enabling communication with other hardware devices external to data processing system 620.

Instruction memory 630 may include one or more non-transitory machine-readable storage media for storing instructions for execution by processor(s) 624. In other embodiments, both memories 626 and 630 may store data upon which processor(s) 624 may operate. Memories 626 and 630 may also store, for example, instructions that, when executed by processor 624 (e.g., in combination with co-processor 632), causes processor(s) 624 to execute cryptographic functions for implementing a digital signature scheme, performing encryption and/or decryption, and/or performing data verification and validation applications. Memories 626 and 630 may be implemented in a secure hardware element and may be tamper resistant.

Co-processor 632 is bi-directionally connected to bus 622. Co-processor 632 may be a special type of a co-processor optimized for running post-quantum encryption/decryption security software configured to implement one or more digital signature schemes that may include lattice based signature schemes such as DILITHIUM and qTESLA.. Accordingly, and in accordance with the described embodiments, co-processor 632 may be used to generate adaptive shares to provide improved security to secret bit masking values y utilized during execution of a digital signature scheme, as discussed above and illustrated in the algorithm of FIG. 1. The algorithm executed on co-processor 632, for example, may be used to encrypt/decrypt data and instructions in data processing system 620.

Network communication interface 634 is bi-directionally connected to bus 622 and is configured to transmit and receive data via a suitable communications network. In various embodiments, communications interface 634 may include a wired or wireless network adapter configured to communicate over a wired or wireless connection with a local area network. In other embodiments, communications interface 634 may be configured to communicate over a wide area network, such as a cellular network (e.g., LTE, 4G, 5G, etc.). Communications interface 634 is configured to transmit and receive data, such as cryptographic signatures, such as those described herein, to remove computing system that may, in turn, elect to validate and or otherwise utilize the cryptographic signatures. In various embodiments, for example, data processing system 620 may be configured to calculate a message signature for a data packet generated by processor(s) 624 of data processing system 620. In that case, both the signature and the data packet may be transmitted to a remote computer system that may, in turn, use the cryptographic signature to confirm the authenticity of the received data packet.

As used herein, the term "non-transitory machine-readable storage medium" will be understood to exclude a transitory propagation signal but to include all forms of volatile and non-volatile memory. When software is implemented on a processor, the combination of software and processor becomes a single specific machine. Although the various embodiments have been described in detail, it should be understood that the invention is capable of other embodiments and its details are capable of modifications in various obvious respects.

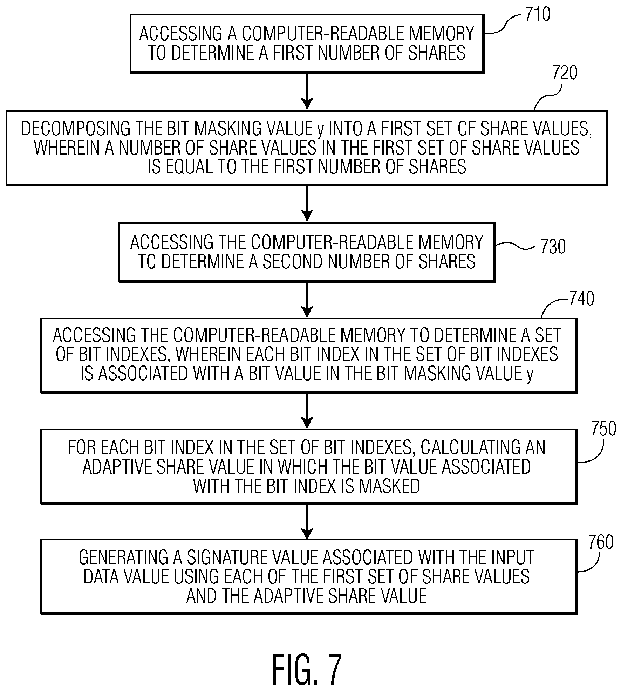

FIG. 7 is a flowchart of an example method for operating a device to implement a signature scheme, wherein the signature scheme enables computation of a digital signature of an input data value using a bit masking value y and wherein different bits in the bit masking value y have different levels of vulnerability to a side channel leakage attack conducted using a communication pin of an integrated circuit. At step 710, a computer-readable memory is accessed to determine a first number of shares and at step 720, the bit masking value y is decomposed into a first set of share values, wherein a number of share values in the first set of share values is equal to the first number of shares. At step 730, the computer-readable memory is accessed to determine a second number of shares and at step 740, the computer-readable memory is accessed to determine a set of bit indexes, wherein each bit index in the set of bit indexes is associated with a bit value in the bit masking value y. At step 750, for each bit index in the set of bit indexes, calculating an adaptive share value in which the bit value associated with the bit index is masked and at step 760, a signature value associated with the input data value is generated using each of the first set of share values and the adaptive share value.

In some aspects, the techniques described herein relate to a device, including: a computer-readable memory; and an integrated circuit (IC) including a processor configured to implement a lattice-based digital signature scheme, wherein the lattice-based digital signature scheme enables computation of a digital signature of an input data value using a secret bit masking vector y and wherein different bits in the secret bit masking vector y have different levels of vulnerability to a side channel leakage attack conducted using a communication pin of the integrated circuit, the processor being configured to: access the computer-readable memory to determine a first number of shares, decompose the secret bit masking vector y into a first set of share values, wherein a number of share values in the first set of share values is equal to the first number of shares, access the computer-readable memory to determine a set of bit indexes, wherein each bit index in the set of bit indexes is associated with a bit value in the secret bit masking vector y, for each bit index in the set of bit indexes, calculate an adaptive share value in which the bit value associated with the bit index is masked, and generate a cryptographic signature value associated with the input data value using each of the first set of share values and the adaptive share value.

In some aspects, the techniques described herein relate to a device, including: a computer-readable memory; and an integrated circuit including a processor configured to implement a cryptographic operation, wherein the cryptographic operation enables computation of a cryptographic result using a bit masking value y, the processor being configured to: access the computer-readable memory to determine a set of bit indexes, wherein each bit index in the set of bit indexes is associated with a bit value in the bit masking value y, for each bit index in the set of bit indexes, calculate an adaptive share value in which the bit value associated with the bit index is masked, and execute a cryptographic operation using the adaptive share value.

In some aspects, the techniques described herein relate to a method operating a device to implement a lattice-based digital signature scheme, wherein the lattice-based digital signature scheme enables computation of a digital signature of an input data value using a bit masking value y and wherein different bits in the bit masking value y have different levels of vulnerability to a side channel leakage attack conducted using a communication pin of an integrated circuit, the method including: accessing a computer-readable memory to determine a first number of shares; decomposing the bit masking value y into a first set of share values, wherein a number of share values in the first set of share values is equal to the first number of shares; accessing the computer-readable memory to determine a set of bit indexes, wherein each bit index in the set of bit indexes is associated with a bit value in the bit masking value y; for each bit index in the set of bit indexes, calculating an adaptive share value in which the bit value associated with the bit index is masked; and generating a digital signature value associated with the input data value using each of the first set of share values and the adaptive share value.

Although the examples have been described with reference to automotive radar systems, the systems and methods described herein may be implemented in conjunction with other types of radar systems. Devices or components described as being separate may be integrated in a single physical device. Also, the units and circuits may be suitably combined in one or more semiconductor devices. That is, the devices described herein may be implemented as a single integrated circuit, or as multiple integrated circuits.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A device, comprising:
a computer-readable memory (626); and
an integrated circuit (IC) including a processor (624) configured to implement a lattice-based digital signature scheme, wherein the lattice-based digital signature scheme enables computation of a digital signature of an input data value using a secret bit masking vector y and wherein different bits in the secret bit masking vector **y** have different levels of vulnerability to a side channel leakage attack conducted using a communication pin of the integrated circuit;
the processor being configured to:
access the computer-readable memory (626) to determine a first number of shares, decompose the secret bit masking vector **y** into a first set of share values, wherein a number of share values in the first set of share values is equal to the first number of shares,
access the computer-readable memory (626) to determine a set of bit indexes, wherein each bit index in the set of bit indexes is associated with a bit value in the secret bit masking vector **y,**
**characterized in that** the processor is further configured to:
for each bit index in the set of bit indexes, calculate an adaptive share value in which the bit value associated with the bit index is masked, and
generate a cryptographic signature value associated with the input data value using each of the first set of share values and the adaptive share value; wherein the processor (624) is further configured to:
access the computer-readable memory (626) to determine, for each bit index in the set of bit indexes, a predetermined number of adaptive shares; and
for each bit index in the set of bit indexes, calculate a number of adaptive shares equal to the predetermined number of adaptive shares for the bit index;
wherein the processor (624) is configured to, for each bit index in the set of bit indexes, calculate the adaptive share value in which the bit value associated with the bit index is masked by:
creating, in the computer-readable memory (626), an initialized adaptive share that is set to a zero value;
determining a random value r, wherein the random value r has a value of 0 or 1;
multiplying the random value r by 2ⁱ, wherein i is equal to the bit index, to generate a masking value; and
adding the initialized adaptive share and the masking value to generate the adaptive share value;
wherein the processor (624) is configured to generate different numbers of adaptive shares for different bit indexes in y, where the number of adaptive shares for each bit index are adjusted to provide different levels of protection to the different bit indexes of the value y, where the bits have different levels of vulnerability

2. The device of claim 1, wherein the processor (624) is configured to generate the cryptographic signature value associated with the input data value using each of the first set of share values and the adaptive share value.

3. The device of any preceding claim, wherein the lattice-based digital signature scheme is a Fiat-Shamir lattice-based cryptography scheme.

4. The device of claim 3, wherein the lattice-based cryptography scheme is a DILITHIUM digital signature scheme.

5. The device of claim 4, wherein the set of bit indexes includes an 8^{th} bit of the secret bit masking vector y.

6. A method operating a device to implement a lattice-based digital signature scheme, wherein the lattice-based digital signature scheme enables computation of a digital signature of an input data value using a bit masking value **y** and wherein different bits in the bit masking value **y** have different levels of vulnerability to a side channel leakage attack conducted using a communication pin of an integrated circuit, the method including:
(710) accessing a computer-readable memory to determine a first number of shares;
(720) decomposing the bit masking value **y** into a first set of share values, wherein a number of share values in the first set of share values is equal to the first number of shares;
(740) accessing the computer-readable memory to determine a set of bit indexes, wherein each bit index in the set of bit indexes is associated with a bit value in the bit masking value **y**;
the method **characterized by**:
(750) for each bit index in the set of bit indexes, calculating an adaptive share value in which the bit value associated with the bit index is masked; and
(760) generating a digital signature value associated with the input data value using each of the first set of share values and the adaptive share value; the method further comprising:
accessing the computer-readable memory to determine, for each bit index in the set of bit indexes, a predetermined number of adaptive shares; and
for each bit index in the set of bit indexes, calculating a number of adaptive shares equal to the predetermined number of adaptive shares for the bit index; the method further comprising, for each bit index in the set of bit indexes, calculating the adaptive share value in which the bit value associated with the bit index is masked by:
creating, in the computer-readable memory, an initialized adaptive share;
determining a random value r, wherein the random value r has a value of 0 or 1;
multiplying the random value r by 2ⁱ, wherein i is equal to the bit index, to generate a masking value; and
adding the initialized adaptive share and the masking value to generate the adaptive share value;
the method further comprising generating different numbers of adaptive shares for different bit indexes in y, where the number of adaptive shares for each bit index are adjusted to provide different levels of protection to the different bit indexes of the value y, where the bits have different levels of vulnerability.

7. The method of claim 6, further comprising generating the digital signature value associated with the input data value using each of the first set of share values and the adaptive share value.

8. The method of claim 6 or 7, further comprising determining that the lattice-based digital signature scheme is a DILITHIUM digital signature scheme.

9. The method of claim 8, further comprising determining that the set of bit indexes includes an 8^{th} bit of the bit masking value **y.**

## Patentansprüche

1. Vorrichtung, umfassend:
einen computerlesbaren Speicher (626); und
eine integrierte Schaltung (IC), die einen Prozessor (624) beinhaltet, der dazu ausgelegt ist, ein gitterbasiertes digitales Signaturschema zu implementieren, wobei das gitterbasierte digitale Signaturschema Berechnung einer digitalen Signatur eines Eingabedatenwerts unter Verwendung eines geheimen Bitmaskierungsvektors y ermöglicht und wobei verschiedene Bits in dem geheimen Bitmaskierungsvektor y unterschiedliche Anfälligkeitsniveaus für einen Seitenkanal-Leckangriff aufweisen, der unter Verwendung eines Kommunikationsstifts der integrierten Schaltung durchgeführt wird;
wobei der Prozessor zu Folgendem ausgelegt ist:
Zugreifen auf den computerlesbaren Speicher (626), um eine erste Anzahl von Anteilen zu bestimmen,
Zerlegen des geheimen Bitmaskierungsvektors y in einen ersten Satz von Anteilswerten, wobei eine Anzahl von Anteilswerten in dem ersten Satz von Anteilswerten gleich der ersten Anzahl von Anteilen ist,
Zugreifen auf den computerlesbaren Speicher (626), um einen Satz von Bit-Indizes zu bestimmen, wobei jeder Bit-Index in dem Satz von Bit-Indizes mit einem Bitwert in dem geheimen Bitmaskierungsvektor y assoziiert ist,
**dadurch gekennzeichnet, dass** der Prozessor ferner zu Folgendem ausgelegt ist:
Berechnen eines adaptiven Anteilswerts, in dem der mit dem Bit-Index assoziierte Bitwert maskiert ist, für jeden Bit-Index in dem Satz von Bit-Indizes und
Erzeugen eines kryptografischen Signaturwerts, der mit dem Eingabedatenwert assoziiert ist, unter Verwendung jedes von dem ersten Satz von Anteilswerten und dem adaptiven Anteilswert; wobei der Prozessor (624) ferner zu Folgendem ausgelegt ist:
Zugreifen auf den computerlesbaren Speicher (626), um für jeden Bit-Index in dem Satz von Bit-Indizes eine vorbestimmte Anzahl von adaptiven Anteilen zu bestimmen; und
für jeden Bit-Index in dem Satz von Bit-Indizes Berechnen einer Anzahl von adaptiven Anteilen gleich der vorbestimmten Anzahl von adaptiven Anteilen für den Bit-Index;
wobei der Prozessor (624) dazu ausgelegt ist, für jeden Bit-Index in dem Satz von Bit-Indizes den adaptiven Anteilswert zu berechnen, in dem der mit dem Bit-Index assoziierte Bitwert maskiert ist, durch:
Erstellen eines initialisierten adaptiven Anteils, der auf einen Nullwert gesetzt ist, in dem computerlesbaren Speicher (626);
Bestimmen eines Zufallswerts r, wobei der Zufallswert r einen Wert von 0 oder 1 aufweist;
Multiplizieren des Zufallswerts r mit 2ⁱ, wobei i gleich dem Bit-Index ist, um einen Maskierungswert zu erzeugen; und
Addieren des initialisierten adaptiven Anteils und des Maskierungswerts, um den adaptiven Anteilswert zu erzeugen;
wobei der Prozessor (624) dazu ausgelegt ist, unterschiedliche Anzahlen von adaptiven Anteilen für verschiedene Bit-Indizes in y zu erzeugen, wobei die Anzahl von adaptiven Anteilen für jeden Bit-Index angepasst wird, um unterschiedliche Schutzniveaus für die verschiedenen Bit-Indizes des Werts y bereitzustellen,
wobei die Bits unterschiedliche Anfälligkeitsniveaus aufweisen.

2. Vorrichtung nach Anspruch 1, wobei der Prozessor (624) dazu ausgelegt ist, den kryptografischen Signaturwert, der mit dem Eingabedatenwert assoziiert ist, unter Verwendung jedes von dem ersten Satz von Anteilswerten und dem adaptiven Anteilswert zu erzeugen.

3. Vorrichtung nach einem der vorhergehenden Ansprüche, wobei das gitterbasierte digitale Signaturschema ein gitterbasiertes Fiat-Shamir-Kryptographieschema ist.

4. Vorrichtung nach Anspruch 3, wobei das gitterbasierte Kryptographieschema ein digitales DILITHIUM-Signaturschema ist.

5. Vorrichtung nach Anspruch 4, wobei der Satz von Bit-Indizes ein 8. Bit des geheimen Bitmaskierungsvektors y beinhaltet.

6. Verfahren, das eine Vorrichtung zum Implementieren eines gitterbasierten digitalen Signaturschemas betreibt, wobei das gitterbasierte digitale Signaturschema Berechnung einer digitalen Signatur eines Eingabedatenwerts unter Verwendung eines Bitmaskierungswerts y ermöglicht und wobei verschiedene Bits in dem Bitmaskierungswert y unterschiedliche Anfälligkeitsniveaus für einen Seitenkanal-Leckangriff aufweisen, der unter Verwendung eines Kommunikationsstifts einer integrierten Schaltung durchgeführt wird, wobei das Verfahren Folgendes beinhaltet:
(710) Zugreifen auf einen computerlesbaren Speicher, um eine erste Anzahl von Anteilen zu bestimmen;
(720) Zerlegen des Bitmaskierungswerts y in einen ersten Satz von Anteilswerten, wobei eine Anzahl von Anteilswerten in dem ersten Satz von Anteilswerten gleich der ersten Anzahl von Anteilen ist;
(740) Zugreifen auf den computerlesbaren Speicher, um einen Satz von Bit-Indizes zu bestimmen, wobei jeder Bit-Index in dem Satz von Bit-Indizes mit einem Bitwert in dem Bitmaskierungswert y assoziiert ist;
wobei das Verfahren durch Folgendes gekennzeichnet ist:
(750) Berechnen eines adaptiven Anteilswerts, in dem der mit dem Bit-Index assoziierte Bitwert maskiert ist, für jeden Bit-Index in dem Satz von Bit-Indizes und
(760) Erzeugen eines digitalen Signaturwerts, der mit dem Eingabedatenwert assoziiert ist, unter Verwendung jedes von dem ersten Satz von Anteilswerten und dem adaptiven Anteilswert; wobei das Verfahren ferner Folgendes umfasst:
Zugreifen auf den computerlesbaren Speicher, um für jeden Bit-Index in dem Satz von Bit-Indizes eine vorbestimmte Anzahl von adaptiven Anteilen zu bestimmen; und
für jeden Bit-Index in dem Satz von Bit-Indizes Berechnen einer Anzahl von adaptiven Anteilen gleich der vorbestimmten Anzahl von adaptiven Anteilen für den Bit-Index; wobei das Verfahren ferner für jeden Bit-Index in dem Satz von Bit-Indizes Berechnen des adaptiven Anteilswerts umfasst, bei dem der mit dem Bit-Index assoziierte Bitwert maskiert ist, durch:
Erstellen eines initialisierten adaptiven Anteils in dem computerlesbaren Speicher;
Bestimmen eines Zufallswerts r, wobei der Zufallswert r einen Wert von 0 oder 1 aufweist;
Multiplizieren des Zufallswerts r mit 2ⁱ, wobei i gleich dem Bit-Index ist, um einen Maskierungswert zu erzeugen; und
Addieren des initialisierten adaptiven Anteils und des Maskierungswerts, um den adaptiven Anteilswert zu erzeugen;
wobei das Verfahren ferner Erzeugen unterschiedlicher Anzahlen adaptiver Anteile für verschiedene Bit-Indizes in y umfasst, wobei die Anzahl von adaptiven Anteilen für jeden Bit-Index angepasst wird, um unterschiedliche Schutzniveaus für die verschiedenen Bit-Indizes des Werts y bereitzustellen, wobei die Bits unterschiedliche Anfälligkeitsniveaus aufweisen.

7. Verfahren nach Anspruch 6, ferner umfassend Erzeugen des digitalen Signaturwerts, der mit dem Eingabedatenwert assoziiert ist, unter Verwendung jedes von dem ersten Satz von Anteilswerten und dem adaptiven Anteilswert.

8. Verfahren nach Anspruch 6 oder 7, ferner umfassend Bestimmen, dass das gitterbasierte digitale Signaturschema ein digitales DILITHIUM-Signaturschema ist.

9. Verfahren nach Anspruch 8, ferner umfassend Bestimmen, dass der Satz von Bit-Indizes ein 8. Bit des Bitmaskierungswerts y beinhaltet.

## Revendications

1. Dispositif, comprenant :
une mémoire lisible par ordinateur (626) ; et
un circuit intégré (IC) comprenant un processeur (624) configuré pour mettre en œuvre un schéma de signature numérique à base de treillis, le schéma de signature numérique à base de treillis permettant le calcul d'une signature numérique d'une valeur de données d'entrée au moyen d'un vecteur de masquage de bits secret y et différents bits du vecteur de masquage de bits secret y présentant différents niveaux de vulnérabilité à une attaque par fuite de canal latéral menée au moyen d'une broche de communication du circuit intégré ;
le processeur étant configuré pour :
accéder à la mémoire lisible par ordinateur (626) pour déterminer un premier nombre de parts,
décomposer le vecteur de masquage de bits secret y en un premier ensemble de valeurs de parts, un nombre de valeurs de parts dans le premier ensemble de valeurs de parts étant égal au premier nombre de parts,
accéder à la mémoire lisible par ordinateur (626) pour déterminer un ensemble d'index binaires, chaque index binaire de l'ensemble d'index binaires étant associé à une valeur binaire du vecteur de masquage de bits secret y,
**caractérisé en ce que** le processeur est en outre configuré pour :
pour chaque index binaire de l'ensemble d'index binaires, calculer une valeur de part adaptative dans laquelle la valeur binaire associée à l'index binaire est masquée, et
générer une valeur de signature cryptographique associée à la valeur de données d'entrée en utilisant chacune des valeurs du premier ensemble de valeurs de parts et de la valeur de part adaptative ; le processeur (624) étant en outre configuré pour :
accéder à la mémoire lisible par ordinateur (626) pour déterminer, pour chaque index binaire de l'ensemble d'index binaires, un nombre prédéterminé de parts adaptatives ; et
pour chaque index binaire de l'ensemble d'index binaires, calculer un nombre de parts adaptatives égal au nombre prédéterminé de parts adaptatives pour l'index binaire ;
dans lequel le processeur (624) est configuré, pour chaque index binaire de l'ensemble d'index binaires, pour calculer la valeur de part adaptative dans laquelle la valeur binaire associée à l'index binaire est masquée par :
la création, dans la mémoire lisible par ordinateur (626), d'une part adaptative initialisée qui est fixée à une valeur nulle ;
la détermination d'une valeur aléatoire r, la valeur aléatoire r ayant une valeur de 0 ou 1 ;
la multiplication de la valeur aléatoire r par 2ⁱ, i étant égal à l'index binaire, pour générer une valeur de masquage ; et
l'ajout de la part adaptative initialisée et de la valeur de masquage pour générer la valeur de part adaptative ;
dans lequel le processeur (624) est configuré pour générer différents nombres de parts adaptatives pour différents index binaires dans y, le nombre de parts adaptatives pour chaque index binaire étant ajusté pour fournir différents niveaux de protection aux différents index binaires de la valeur y, les bits présentant différents niveaux de vulnérabilité.

2. Dispositif selon la revendication 1, dans lequel le processeur (624) est configuré pour générer la valeur de signature cryptographique associée à la valeur de données d'entrée en utilisant chacune des valeurs du premier ensemble de valeurs de parts et de la valeur de part adaptative.

3. Dispositif selon l'une quelconque des revendications précédentes, dans lequel le schéma de signature numérique à base de treillis est un schéma de cryptographie à base de treillis Fiat-Shamir.

4. Dispositif selon la revendication 3, dans lequel le schéma de cryptographie à base de treillis est un schéma de signature numérique EN DILITHIUM.

5. Dispositif selon la revendication 4, dans lequel l'ensemble d'index binaires comprend un 8^{ème} bit du vecteur de masquage de bits secret y.

6. Procédé de fonctionnement d'un dispositif pour mettre en œuvre un schéma de signature numérique à base de treillis, le schéma de signature numérique à base de treillis permettant le calcul d'une signature numérique d'une valeur de données d'entrée au moyen d'une valeur de masquage de bits y et différents bits de la valeur de masquage de bits y présentant différents niveaux de vulnérabilité à une attaque par fuite de canal latéral menée au moyen d'une broche de communication d'un circuit intégré, le procédé comprenant :
(710) l'accès à une mémoire lisible par ordinateur pour déterminer un premier nombre de parts ;
(720) la décomposition de la valeur de masquage de bits y en un premier ensemble de valeurs de parts, un nombre de valeurs de parts dans le premier ensemble de valeurs de parts étant égal au premier nombre de parts ;
(740) l'accès à la mémoire lisible par ordinateur pour déterminer un ensemble d'index binaires, chaque index binaire de l'ensemble d'index binaires étant associé à une valeur binaire de la valeur de masquage de bits y ; le procédé étant **caractérisé par** :
(750) pour chaque index binaire de l'ensemble d'index binaires, le calcul d'une valeur de part adaptative dans laquelle la valeur binaire associée à l'index binaire est masquée ; et
(760) la génération d'une valeur de signature numérique associée à la valeur de données d'entrée en utilisant chacune des valeurs du premier ensemble de valeurs de parts et de la valeur de part adaptative ; le procédé comprenant en outre :
l'accès à la mémoire lisible par ordinateur pour déterminer, pour chaque index binaire de l'ensemble d'index binaires, un nombre prédéterminé de parts adaptatives ; et
pour chaque index binaire de l'ensemble d'index binaires, le calcul d'un nombre de parts adaptatives égal au nombre prédéterminé de parts adaptatives pour l'index binaire ;
le procédé comprenant en outre, pour chaque index binaire de l'ensemble d'index binaires, le calcul de la valeur de part adaptative dans laquelle la valeur binaire associée à l'index binaire est masquée par :
la création, dans la mémoire lisible par ordinateur, d'une part adaptative initialisée ;
la détermination d'une valeur aléatoire r, la valeur aléatoire r ayant une valeur de 0 ou 1 ;
la multiplication de la valeur aléatoire r par 2ⁱ, i étant égal à l'index binaire, pour générer une valeur de masquage ; et
l'ajout de la part adaptative initialisée et de la valeur de masquage pour générer la valeur de part adaptative ;
le procédé comprenant en outre la génération de différents nombres de parts adaptatives pour différents index binaires dans y, le nombre de parts adaptatives pour chaque index binaire étant ajusté pour fournir différents niveaux de protection aux différents index binaires de la valeur y, les bits présentant différents niveaux de vulnérabilité.

7. Procédé selon la revendication 6, comprenant en outre la génération de la valeur de signature numérique associée à la valeur de données d'entrée en utilisant chacune des valeurs du premier ensemble de valeurs de parts et de la valeur de part adaptative.

8. Procédé selon la revendication 6 ou 7, comprenant en outre la détermination du fait que le schéma de signature numérique à base de treillis est un schéma de signature numérique EN DILITHIUM.

9. Procédé selon la revendication 8, comprenant en outre la détermination que l'ensemble d'index binaires comprend un 8^{ème} bit de la valeur de masquage de bits y.
